# EUROPEAN PATENT APPLICATION

(11) **EP 1 459 619 A1**
(43) Date of publication of application: **22.09.2004**
(21) Application number: 04075859.1
(22) Date of filing: 17.03.2004
(51) Int. Cl.: A01G 1/06

(54) **Holder for plant cuttings and device for manufacturing such a holder**

(30) Priority: 21.03.2003 NL 1022993
(71) Applicant: H.B. Engineering B.V., 7205 DA Zutphen (NL)
(72) Inventor: Heuterman, Willem Hubert, 7205 DA Zutphen (NL); Bakkerweerd, Jan, 6971 JL Brummen (NL)
(74) Representative: Dokter, Hendrik Daniel

(57) **Abstract**

Holder (1) for plant cuttings, comprising an elongate strip (1) of flexible material, preferably of cardboard, provided with holder elements (4,5,6) for receiving in each case one plant cutting therein, which strip (1) is provided in each case with pairs of incisions (2,3) in lengthwise direction, which pairs of incisions (2,3) bound a bridge element (4), which bridge element (4), in co-action with the adjacent parts (5,6) of the strip (1) in transverse direction of the strip (1), provide a holder element (4,5,6) for receiving a plant cutting, and device (7) for manufacturing such a holder.

## Description

The invention relates to a holder for plant cuttings, comprising an elongate strip of flexible material provided with holder elements for receiving in each case one plant cutting therein.

Such a holder is applied for transporting plant cuttings, for instance as air freight. The holder serves as alternative to the transport of plant cuttings in plastic bags. These plastic bags must be opened at their destination, whereafter the cuttings must be singularized, i.e. separated into individual cuttings, and then planted manually in a culture material, for instance soil. The holder provides the advantage that the cuttings are already transported in singularized form, and in principle provides the option of mechanical planting of the cuttings in a culture material by feeding a holder with cuttings into a planting machine suitable for this purpose.

Known from the Netherlands patent 1011492 is a holder of paper or plastic foil into which at least three lips are punched at the position of each holder element which are adapted to fixedly clamp the plant cuttings. The choice of material must herein be such that the lips are urged back with a certain force to their original position or, in other words, the material of the holder and the lips must possess a certain resilience.

It is perceived as a drawback of this holder that in practical situations paper is unsuitable as holder material, because paper is insufficiently resilient, particularly at positions where it has been previously folded. It is seen as a further drawback that, of the at least three lips in this holder, at least one lip always protrudes obliquely forward out of the main plane of the holder in the transporting direction during transport of the holder in longitudinal direction in a planting machine, as a consequence of which the chance of obstructions in the planting machine must be deemed high.

Further known from the Netherlands patent 1011492 are holders comprising a plastic carrier to which plastic clamping elements adapted to fixedly clamp a plant cutting are fixed by means of plastic bridge elements. These holders have the drawback that the production thereof is exceptionally costly, as a result of which they are too expensive for once-only use. The necessary reuse involves logistical problems and additional cost for return transport.

It is an object of the invention to provide a holder for plant cuttings which can be manufactured in relatively simple manner from inexpensive flexible material at relatively low cost.

It is a further object to provide such a holder which provides the option of machine planting of cuttings in a culture material by feeding this holder with cuttings into a planting machine suitable for this purpose.

It is also an object to provide such a holder which is suitable for once-only use.

These objectives are achieved with a holder of the type stated in the preamble, of which the strip according to the invention is provided in each case with pairs of incisions in lengthwise direction, which pairs of incisions bound a bridge element, which bridge element, in co-action with the adjacent parts of the strip in transverse direction of the strip, provide a holder element for receiving a plant cutting.

The holder elements in a holder according to the invention are obtained in simple manner by pressing the bridge elements out of the surface of the flexible material in a first direction transversely of this surface, and by pressing the adjacent parts of the strip out of the surface of the flexible material in a second direction opposite to the first direction transversely of this surface. Because the incisions extend in longitudinal direction of the holder, bridge elements are connected fixedly to the material of the holder in longitudinal direction of the holder, as a consequence of which the holder elements cannot form obstacles during transport in longitudinal direction in a planting machine, and the chance of obstructions in the planting machine is zero, in any event exceptionally small.

A holder according to the invention is for instance manufactured from a plastic material or from paper.

In an advantageous embodiment, the holder is manufactured from cardboard that has for instance a mass per unit area greater than 200 g/m².

It has been found that a cardboard holder that has a mass per unit area amounting to 275 g/m² is particularly suitable for the intended application, and that this can moreover be made in practically simple manner.

The invention further relates to a device for manufacturing a holder according to the above described invention, which device is provided with a stamp rotatable about a first rotation axis and a counter-stamp co-acting therewith which is rotatable about a second rotation axis parallel to the first rotation axis, which stamp is successively assembled, in the direction of the first rotation axis, from a first disc-like part having in peripheral direction at least three bulges distributed regularly over the periphery, a second rotatable disc-like part having at least three recesses in peripheral direction, and a third disc-like part having at least three bulges in peripheral direction, wherein the projections of the respective bulges of the first and third disc-like part and the recesses of the second disc-like part coincide in a direction parallel to the first rotation axis, and wherein the total thickness of the disc-like parts is at least equal to the width of the holder to be manufactured.

In such a stamp the respective bulges provide in each case a cutting and pressing tool, the edges of which arrange the pairs of incisions in lengthwise direction in the flexible material so as to create the bridge elements between these incisions, and the peripheral surfaces of which press the bridge elements out of the surface of the flexible material in a first direction transversely of this surface and press the adjacent parts of the strip out of the surface of the flexible material in a second direction opposite to the first direction transversely of this surface.

The first, second and third disc-like parts preferably have the same thickness.

In one embodiment the counter-stamp is successively assembled, in the direction of the second rotation axis, from a first disc-like part having in peripheral direction at least three recesses distributed regularly over the periphery, a second rotatable disc-like part having at least three bulges in peripheral direction, and a third disc-like part having at least three recesses in peripheral direction, wherein the projections of the respective recesses of the first and third disc-like part and the bulges of the second disc-like part coincide in a direction parallel to the second rotation axis, and which recesses in the first and third disc-like parts and bulges in the second disc-like part of the counter-stamp correspond with the respective bulges in the first and third disc-like part and the recesses in the second disc-like part of the stamp.

It has been found in a practically particularly advantageous embodiment that the number of bulges and recesses in the respective disc-like parts amounts to four.

In a device according to the invention the stamp and the counter-stamp are preferably assembled from releasable disc-like parts.

Releasable disc-like parts provide the advantage that in principle only two different types of component need be produced for a stamp and a counter-stamp, viz. a disc-like part with bulges and a disc-like part with recesses. From these disc-like parts it is possible, with a suitably chosen sequence thereof, to assemble a stamp or a counter-stamp as required.

The invention will be elucidated hereinbelow on the basis of exemplary embodiments and with reference to the drawings.

In the drawings
Fig. 1 shows in perspective view a part of an embodiment of a holder according to the invention,
Fig. 2 shows in a schematic axial section a part of an embodiment of a device according to the invention, and
Fig. 3 is an exploded view of the device shown in fig. 2.

Corresponding components are designated in the figures with the same reference numerals.

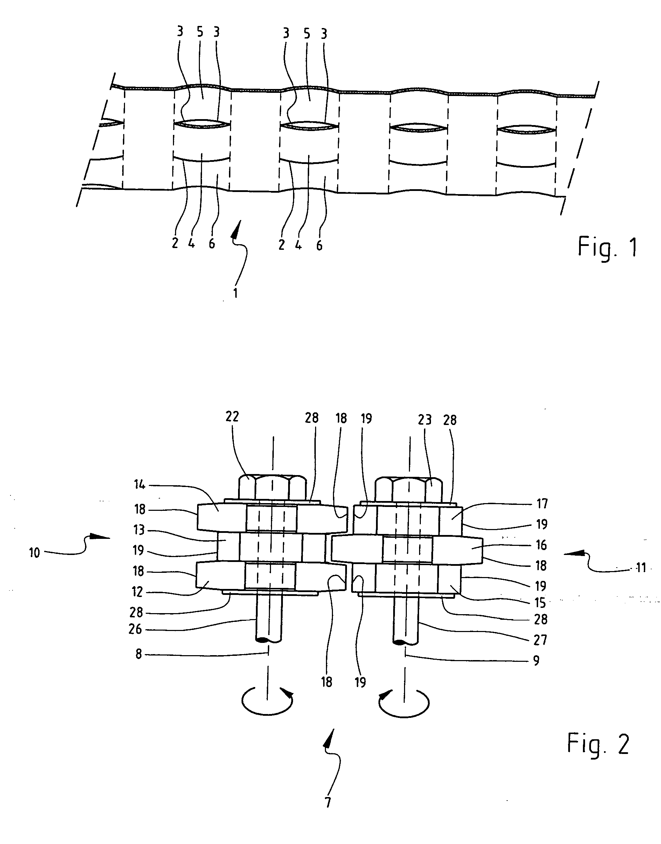

Fig. 1 shows a cardboard strip 1 provided with pairs of incisions 2, 3 in lengthwise direction which in each case bound a bridge element 4. In co-action with the adjacent parts 5, 6 of strip 1 in transverse direction, bridge elements 4 form a holder element for receiving a plant cutting (not shown).

Fig. 2 shows an axial section of a device 7 for manufacturing a holder 1 as shown in fig. 1, with a stamp 10 rotatable about a first rotation axis 8 and, co-acting therewith, a counter-stamp 11 rotatable about a second rotation axis 9. Stamp 10 is successively assembled, in the direction of axis 8, from a first disc 12 which has in peripheral direction four bulges 18 regularly distributed over the periphery, a second disc 13 which has in peripheral direction four recesses 19 regularly distributed over the periphery, and a third disc 14 which has four bulges 18 in peripheral direction, wherein the projections of the respective bulges 18 of the first disc 12 and third disc 14 and the recesses 19 of the second disc 13 coincide in a direction parallel to rotation axis 8, and wherein the total thickness of discs 12, 13, 14 is at least equal to the width of the holder 1 to be manufactured. Counter-stamp 11 is successively assembled, in the direction of second rotation axis 9, from a first disc 15 which has in peripheral direction four recesses 19 regularly distributed over the periphery, a second disc 16 which has four bulges 18 in peripheral direction, and a third disc 17 which has four recesses 19 in peripheral direction, wherein the projections of the respective recesses 18 of the first disc 15 and third disc 17 and the bulges 19 of the second disc 16 coincide in a direction parallel to axis 9, and which recesses 19 in the first disc 15 and third disc 17 and bulges 18 in second disc 16 of counter-stamp 11 correspond with the respective bulges 18 in the first disc 12 and third disc 14 and recesses 19 in second disc 13 of stamp 10. Discs 12-14 and 15-17 all have the same thickness and are held together between rings 28 by a bush 22, 23 provided with an internal screw thread 20, 21 and a shaft 26, 27 provided with an external screw thread 24, 25 co-acting with the respective internal screw thread 20, 21. At least one of the shafts 26, 27 is provided with an external drive (not shown). In the operative situation a strip of cardboard is fed through between stamp 10 and counter-stamp 11, wherein stamp 10 and counter-stamp 11 rotate in opposite directions. These directions are represented in the figures by the curved arrows round rotation axes 8, 9, and a strip of cardboard is then introduced perpendicularly of the drawing surface. In the shown situation the bulges 18 of stamp 10 directed toward counter-stamp 11 and the bulges 18 of counter-stamp 11 directed toward stamp 10 provide in each case a cutting and pressing tool, the edges of which arrange the pairs of incisions 2, 3 in lengthwise direction in the strip of cardboard so as to create bridge elements 4, and the peripheral surfaces of which press the bridge elements 4 out of the surface of the strip in a first direction (in the shown situation to the left) transversely of this surface, and press the adjacent parts 5, 6 of the strip out of the surface of the strip in an opposite direction (in the shown situation to the right) transversely of this surface.

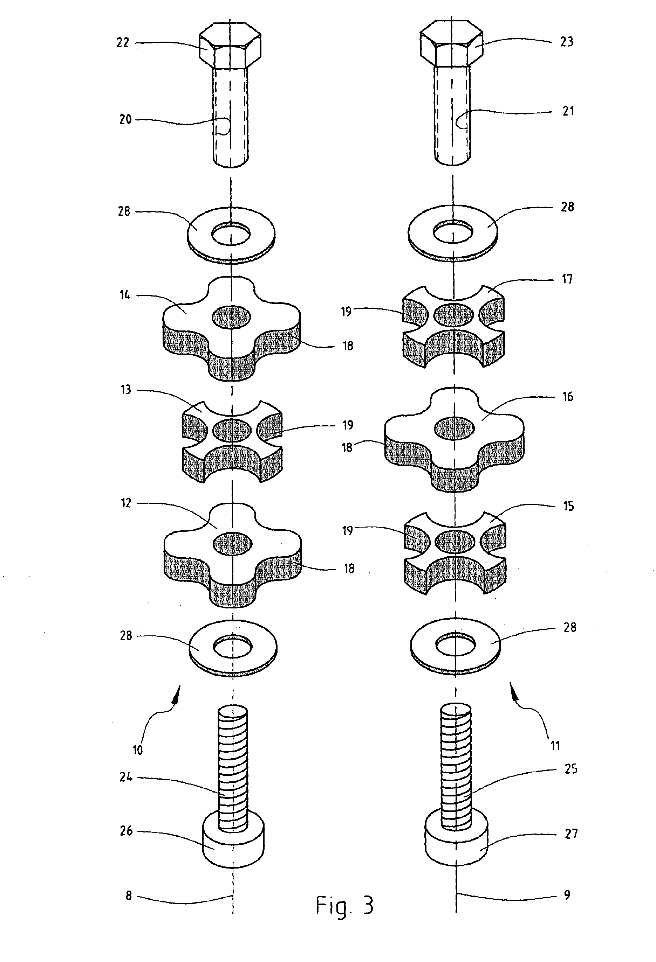

Fig. 3 shows an exploded view of stamp 10 (on the left in the figure) and counter-stamp 11 (on the right in the figure) of the device 7 shown in fig. 2, from which it is apparent that the projections of bulges 18 of the first disc 12 and third disc 14 and recesses 19 of the second disc 13 of stamp 10 coincide in a direction parallel to rotation axis 8, that the projections of recesses 19 of the first disc 15 and third disc 17 and bulges 18 of the second disc 16 of counter-stamp 11 coincide in a direction parallel to rotation axis 9, and that recesses 19 in the first disc 15 and third disc 17 and bulges 18 in the second disc 16 of counter-stamp 11 correspond with respective bulges 18 in the first disc 12 and third disc 14 and recesses 19 in the second disc 13 of stamp 10.

## Claims

1. Holder (1) for plant cuttings, comprising an elongate strip (1) of flexible material provided with holder elements (4, 5, 6) for receiving in each case one plant cutting therein, **characterized in that** the strip (1) is provided in each case with pairs of incisions (2, 3) in lengthwise direction, which pairs of incisions (2, 3) bound a bridge element (4), which bridge element (4), in co-action with the adjacent parts (5, 6) of the strip in transverse direction of the strip (1), provide a holder element (4, 5, 6) for receiving a plant cutting.

2. Holder (1) as claimed in claim 1, **characterized in that** it is manufactured from a plastic material.

3. Holder (1) as claimed in claim 1, **characterized in that** it is manufactured from paper.

4. Holder (1) as claimed in claim 1, **characterized in that** it is manufactured from cardboard.

5. Holder (1) as claimed in claim 4, **characterized in that** it has a mass per unit area greater than 200 g/m².

6. Holder (1) as claimed in claim 4, **characterized in that** the mass per unit area amounts to 275 g/m².

7. Device (7) for manufacturing a holder (1) as claimed in any of the claims 1-6, provided with a stamp (10) rotatable about a first rotation axis (8) and a counter-stamp (11) co-acting therewith which is rotatable about a second rotation axis (9) parallel to the first rotation axis (8), which stamp (10) is successively assembled, in the direction of the first rotation axis (8), from a first disc-like part (12) having in peripheral direction at least three bulges (18) distributed regularly over the periphery, a second disc-like part (13) having at least three recesses (19) in peripheral direction, and a third disc-like part (14) having at least three bulges (18) in peripheral direction, wherein the projections of the respective bulges (18) of the first (12) and third disc-like part (14) and the recesses (19) of the second disc-like part (13) coincide in a direction parallel to the first rotation axis (8), and wherein the total thickness of the disc-like parts (12, 13, 14) is at least equal to the width of the holder (1) to be manufactured.

8. Device (7) as claimed in claim 7, **characterized in that** the first (12), second (13) and third disc-like part (14) have the same thickness.

9. Device (7) as claimed in claims 7-8, **characterized in that** the counter-stamp (11) is successively assembled, in the direction of the second rotation axis (9), from a first disc-like part (15) having in peripheral direction at least three recesses (19) distributed regularly over the periphery, a second rotatable disc-like part (16) having at least three bulges (18) in peripheral direction, and a third disc-like part (17) having at least three recesses in peripheral direction, wherein the projections of the respective recesses (19) of the first (15) and third disc-like part (17) and the bulges (18) of the second disc-like part (16) coincide in a direction parallel to the second rotation axis (9), and which recesses (19) in the first (15) and third disc-like part (17) and bulges (18) in the second disc-like part (16) of the counter-stamp (11) correspond with the respective bulges (18) in the first (12) and third disc-like part (14) and the recesses (19) in the second disc-like part (13) of the stamp (10).

10. Device (7) as claimed in any of the claims 7-9, **characterized in that** the number of bulges (18) and recesses (19) in the respective disc-like parts (12, 14, 16; 13, 15, 17) amounts to four.

11. Device (7) as claimed in any of the claims 7-10, **characterized in that** the stamp (10) is assembled from releasable disc-like parts (12, 13, 14).

12. Device (7) as claimed in any of the claims 7-11, **characterized in that** the counter-stamp (11) is assembled from releasable disc-like parts (15, 16, 17).
